# EUROPÄISCHE PATENTANMELDUNG

(11) **EP 0 933 744 A2**
(43) Veröffentlichungstag der Anmeldung: **04.08.1999**
(21) Anmeldenummer: 99100254.4
(22) Anmeldetag: 08.01.1999
(51) Int. Cl.: G08G 1/0968

(54) **Verfahren zum Suchen einer Zieladresse und zur Ausgabe der Zielrichtungsdaten der Zieladresse**

(30) Priorität: 02.02.1998 DE 19806177
(71) Anmelder: Deutsche Telekom AG, 53113 Bonn (DE)
(72) Erfinder: Neuhoff, Mario, Dipl.-Ing., 51597 Morsbach (DE)

(57) **Zusammenfassung**

Die Erfindung ist auf ein Verfahren zum Suchen einer Zieladresse und zur Ausgabe der Zielrichtungsdaten der Zieladresse ausgerichtet.

Erfindungsgemäß werden die zur Erkennung einer Zieladresse durch ein Zielsuch- bzw. Navigationssystem fehlenden Angaben zur Zieladresse über eine Suchroutine in Verbindung mit mindestens einem namen- und adressbezogenen Auskunftsystem ermittelt. Die Abfrage des Nutzers erfolgt über eine Suchroutine in Form eines Dialogs. Die dabei generierten Zielrichtungsdaten werden über ein geeignetes Medium an den Nutzer ausgegeben.

Das erfindungsgemäße Verfahren eignet sich für den Aufbau von Zielsuchsystemen, ähnlich den bei Fahrzeugen bekannten Navigationssystemen, deren Nutzerkreis aber nicht nur auf Fahrzeuge beschränkt ist.

## Beschreibung

Die Erfindung ist auf ein Verfahren zum Suchen einer Zieladresse und zur Ausgabe der Zielrichtungsdaten der Zieladresse ausgerichtet.

Bekannte Zielsuchsysteme gehen zumeist davon aus, daß die Zieleingabe über die Nennung von Orten, Straßen oder markanten Punkten, wie beispielsweise 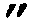 Hauptbahnhof" erfolgt. So ist aus der DE 4429121 ein Navigationssystem für ein Fahrzeug bekannt, welches mit einem Navigationsrechner, mit einer Speichereinrichtung für Wegnetzdaten, mit einer Einrichtung zur Standortbestimmung des Fahrzeuges, mit einer Einrichtung zur Eingabe des gewünschten Fahrzieles und mit einer Einrichtung zur Ausgabe der jeweiligen Fahrtrichtungsdaten ausgerüstet ist. Anhand der Eingabe des gewünschten Fahrzieles erfolgt die Suche, und im Ergebnis der Suche die Ausgabe der Zielrichtungsdaten vom Standort des Nutzers bis zum gewünschten Fahrziel.
Derartige Systeme sind überwiegend auf Fahrzeuge beschränkt und setzen voraus, daß dem Nutzer die genaue Zieladresse bekannt ist.
Problematisch wird es bei derartigen Systemen immer dann, wenn der Nutzer nicht über alle Angaben verfügt, die zur Erkennung der Zieladresse durch das System notwendig sind.

Der Personenkreis, der nicht über die oben beschriebenen Möglichkeiten zur Ermittlung der Zielrichtungsdaten zu einem gewünschten Zielort verfügt, ist bei der Suche nach dem Weg zu seinem Zielort überwiegend darauf angewiesen, die gewünschten Informationen über Auskunftsdienste, wie sie zum Beispiel von der Deutschen Bahn AG oder der Deutschen Telekom AG angeboten werden, einzuholen. Diese Auskunftsdienste beschränken sich zumeist aber auf das konkrete Suchfeld der von ihnen angebotenen Dienstleistung. Bei der Deutschen Bahn AG würde sich die Auskunft beispielsweise auf Zugverbindungen beschränken. Beim Auskunftsdienst der Telekom ist die Information auf die Ermittlung einer Telefonnummer ausgerichtet, wobei der Nutzer zumeist über Angaben zum Namen und zur Adresse des von ihm gewünschten Fernsprechteilnehmers verfügt. Eine Information über Weg-strecken, nach denen beispielsweise ein Reisender dann konkret seine Zieladresse erreichen kann, können diese Auskunftsdienste in der Regel nicht übermitteln, da sie dafür nicht konzipiert sind.

Das erfindungsgemäße Verfahren ist auf die Ermittlung von Zielrichtungsdaten zu einer Zieladresse ausgerichtet. Das erfindungsgemäße Verfahren soll es ermöglichen, im Dialog mit dem Nutzer alle Ausgangsdaten abzufragen, die für die Ermittlung der Zielrichtungsdaten benötigt werden. Das Verfahren soll auch von einem Personenkreis benutzt werden können, der beispielsweise per Bahn, per Bus oder zu Fuß zu diesem Ziel gelangen möchte. Insbesondere soll das Verfahren die Recherche nach der Zieladresse erlauben, wenn der Nutzer die für die rechentechnische Erkennung eines Zieles benötigten Angaben nicht vollständig benennen kann.

Erfindungsgemäß werden die bisher bei den Zielsuchsystemen bekannten Auskunftsquellen um ein Verzeichnis mit der Zuordnung von Namen und Adressen ergänzt, welches eine Recherche nach verschiedenen Suchbegriffen wie beispielsweise Namen, Firmennamen und Adressen erlaubt. Dazu eignet sich insbesondere das Telefonverzeichnis der Telekom AG.
Das erfindungsgemäße Verfahren ermöglicht es, aus wenigen Angaben, z. B. Name/Firmenname, Ort und Telefonnummer eine komplette Zieladresse zusammenzustellen. Ausgehend von dieser Zieladresse werden dann die Zielrichtungsdaten unter Einbeziehung der aus Navigations- und Suchsystemen bekannten Verfahren ermittelt und an den Nutzer ausgegeben.

Das erfindungsgemäße Verfahren ist so konzipiert, daß Anfragen z. B. per Telefon, per Brief, per Fax oder per E-mail gestellt werden können. Die Anfrage kann beispielsweise unter Nennung des Namens und des Wohnortes der Zielperson erfolgen. Die Ermittlung der dazugehörigen Zieladresse kann sowohl operatorgestützt, als auch vollautomatisch unter Einbeziehung, beispielsweise des Telefonverzeichnisses der Telekom AG erfolgen.
Möchte der Reisende nicht nur eine Wegbeschreibung erhalten, sondern online zum Ziel gführt werden, so muß sein jeweils aktueller Standort bekannt sein. Diesen gibt er dem System bekannt, beispielsweise per Telefon oder Handy. Der Standort kann aber auch automatisch mittels eines Standortbestimmungssystems (z. B. GPS) ermittelt werden.

Das erfindungsgemäße Verfahren soll anhand eines Ausführungsbeispiels näher erläutert werden.

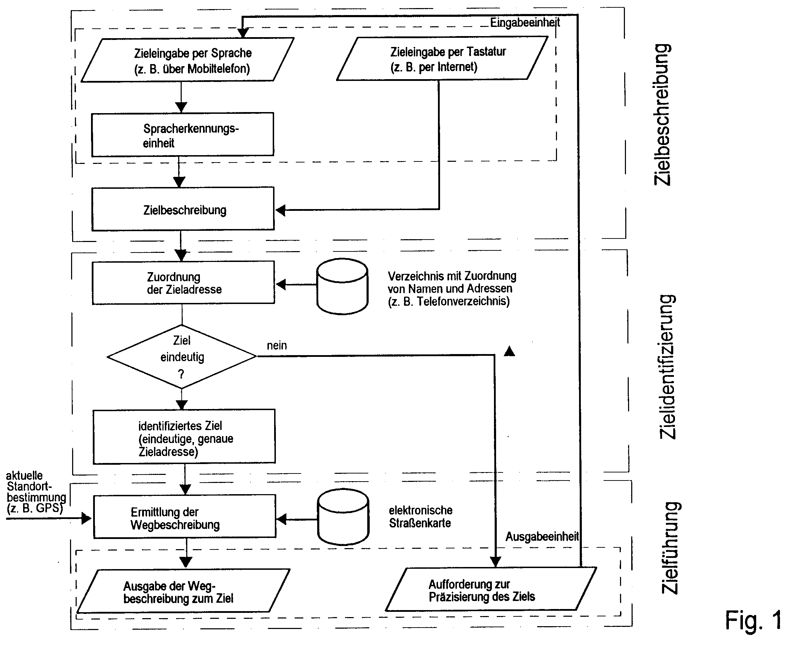

Fig. 1 zeigt anhand eines Ablaufschemas die einzelnen Verfahrensschritte zur Zielsuche und zur Ausgabe der Zielrichtungsdaten am Beispiel der Suche nach dem Standort und dem Weg zur Zentrale der Deutschen Telekom in Bonn.

Die Zieleingabe kann per Sprache, z. B. über ein Mobiltelefon, unter Nennung von Suchbegriffen erfolgen. Der Nutzer wird aufgefordert, seinen Zielwunsch einzugeben. Der Nutzer kennt nur den Firmennamen Deutsche Telekom und den Firmensitz Bonn. Bei vollautomatischer Ermittlung der Zieladresse werden die Angaben über eine Spracherkennungseinheit aufbereitet und an das System weitergeleitet. Die Zuordnung der Zieladresse erfolgt im System durch Vergleich der Angaben des Nutzers mit den Angaben im Namen- und Adressverzeichnis, hier dem Telefonverzeichnis der Telekom AG. Über eine Suchroutine wird anhand der vom Nutzer eingegebenen Daten die genaue Adresse ermittelt. Wenn das Ziel eindeutig bestimmt werden kann, d. h. die Zieladresse kann genau definiert werden, wird an den Nutzer die konkrete Wegbeschreibung zum Ziel ausgegeben. Das kann über eine Ausgabeeinheit per Sprachausgabe erfolgen. Eine weitere Möglichkeit besteht darin, dem Nutzer die gewünschte Wegbeschreibung beispielsweise per Fax zuzustellen. Da der Nutzer nur die Schlagworte Deutsche Telekom und Bonn eingegeben hat, wird an den Nutzer die Information 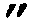 In Bonn gibt es die Zentrale der Deutschen Telekom und die Niederlassung der Deutschen Telekom, wohin wollen Sie" ausgegeben.
Eine solche Frageroutine wird immer dann gestartet, wenn die Angaben des Nutzers zur Zuordnung einer eindeutigen Zieladresse nicht ausreichen. Dabei wird der Nutzer vom System oder vom Operator aufgefordert, weitere Angaben zum gewünschten Ziel einzugeben oder das Ziel zu präzisieren. Nach Präzisierung des Zieles durch den Nutzer erfolgt, wie bereits beschrieben, ein weiterer Durchlauf der Suchroutine, welcher mit der Ausgabe der gewünschten Zielinformation bzw. mit der Führung zu dem gewünschten Ziel abgeschlossen wird. Wünscht der Nutzer eine Führung zum Ziel, so wird er entweder aufgefordert, seinen aktuellen Standort anzugeben, oder es erfolgt eine automatische Standortbestimmung (z. B. per GPS). Der Nutzer wird anschließend, beispielsweise über Informationsausgabe an sein Handy, zum Ziel geführt. Dabei bestätigt der Nutzer per Handy jeweils das Erreichen eines Teilzieles und erhält dann über das Handy die Wegstrecke zum nächsten Teilziel. Dieser Vorgang wiederholt sich bis das eigentliche Ziel erreicht ist.
Nachfolgend wird die Zielführung per Handy an einem Ausführungsbeispiel näher erläutert:
Der Kunde will beispielsweise per Handy zur Zentrale der Deutschen Telekom AG in der Friedrich-Ebert-Alle 140 in Bonn gelotst werden. Nach Bestätigung seines Wunsches durch das System wird der Nutzer nach seinem aktuellen Standort befragt. Durch die bereits beschriebene Eingaberoutine wird der aktuelle Standort im Dialog mit dem Nutzer erfragt und eindeutig identifiziert. Diese Standortidentifizierung endet mit der Bestätigung des Systems (beispielsweise, 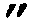 Sie befinden sich z. Zt. im Hauptbahnhof in Bonn"). Nachdem Ziel und Standort eindeutig identifiziert sind, setzt die eigentliche Zielführung ein. Dabei bestätigt der Nutzer per Handy jeweils das Erreichen eines Teilziels und erhält dann über das Handy die Wegstrecke zum nächsten Teilziel. Dieser Vorgang wiederholt sich bis das eigentliche Ziel erreicht ist. Der Dialog mit dem Nutzer kann dabei entweder per Operator, oder automatisch per Sprachverbindung mittels automatischer Spracherkennung und -synthese oder unter Nutzung des SMS(short message services) geführt werden.

Im konkreten Fall könnte der Dialog wie nachfolgend beschrieben aussehen. Das Suchsystem wird dabei als 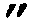 Telelotse" bezeichnet.
Telelotse: 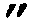 Die Entfernung zwischen Ihrem momentanen Standort und Ihrem Ziel beträgt 3 km. Wie möchten Sie zum Ziel gelangen?"
Nutzer: 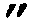 Mit öffentlichen Verkehrsmitteln"
Der Nutzer kann beispielsweise auch alternative Möglichkeiten, wie beispielsweise Taxi, Auto, Fahrrad oder den Gang zu Fuß wählen.

Da der momentane Standort ggf. noch einer weiteren Eingrenzung bedarf, um den Nutzer sicher an das Ziel zu führen (der Hauptbahnhof ist groß und hat z. B. mehrere Ausgänge), führt der Telelotse den Nutzer zunächst an einen markanten Punkt.
Telelotse: 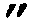 Bitte folgen Sie den Schildern und gehen Sie zum Hauptausgang des Bahnhofs".
   Der markante Punkt kann auch ein auffälliges Gebäude, ein Denkmal oder eine bestimmte Straßenkreuzung o. ä. sein. Die elektronische Straßenkarte in der Datenbank des Telelotsen muß eine entsprechend hohe Auflösung haben.
   Der Nutzer bestätigt das Erreichen des Teilziels Hauptausgang Bahnhof per Handy. Danach erhält er die Wegbeschreibung der nächsten Etappe.
Telelotse: 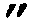 Bitte gehen Sie zur U-Bahn-Haltestelle und nehmen Sie die U-Bahn Linie 16 Richtung Bad Godesberg. Steigen Sie an der Haltestelle Ollenhauerstraße aus. Bitte bestätigen Sie nach dem Aussteigen das Erreichen des Zwischenzieles"
   Nach der Bestätigung durch den Nutzer, daß er das Teilziel erreicht hat, wird er weiter zum Ziel geführt.
Telelotse: 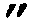 Folgen Sie bitte der Friedrich-Ebert-Alle zu Fuß in Richtung Bad Godesberg. Nach 300m befindet sich auf der rechten Seite Ihr Ziel."

Falls der Nutzer per Taxi zum Ziel fahren will, wird er zum Taxistand gelotst (falls einer in der Nähe ist) oder der Telelotse bestellt automatisch ein Taxi zum momentanen Standort und gibt eine entsprechende Bestätigung an den Nutzer, beispielsweise, 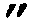 Ein Taxi holt Sie in 5 Minuten an Ihrem jetzigen Standort ab".

Das erfindungsgemäße Verfahren eignet sich grundsätzlich für den Aufbau eines Zielsuchsystems, welches ähnlich wie die bei Fahrzeugen bekannten Navigationssysteme aufgebaut ist, dessen Nutzerkreis aber nicht nur auf Fahrzeuge beschränkt ist.
Das Verfahren eignet sich insbesondere auch als eine neue Dienstleistung für Mobilfunknetze.
Bei Mobilfunknetzen kann der jeweilige Standort des Nutzers, auch unter Einbeziehung der bekannten Netzstruktur der Netzzellen des Mobilfunknetzes, ermittelt werden, da es generell möglich ist, den Standort des Handys zu bestimmen. Das kann im Mobilfunknetz beispielsweise über Laufzeitmessungen erfolgen.
Ein weiterer Anwendungsfall im Rahmen des Mobilfunks wird darin gesehen, das erfindungsgemäße Verfahren beispielsweise als neue Dienstleistung für Stadtführungen zu konzipieren. Dieser Anwendungsfall ist insbesondere auf einen Nutzerkreis zugeschnitten, der eine individuelle Führung wünscht und seine Ziele selbst auswählen möchte. So wird diesem Nutzer beispielsweise durch einen Diensteanbieter, der Stadtführungen organisiert, ein Handy bereitgestellt, welches ihn zu den Sehenswürdigkeiten der Stadt lotst und ihm gleichzeitig auch Wissenswertes zur Stadtgeschichte und zu den jeweils angesteuerten Etappen übermittelt. Der Kunde kann dabei auswählen, welche Ziele er ansteuern möchte. Im Suchsystem sind auch aktuelle Informationen über Öffnungszeiten von gewünschten Zielen, beispielsweise von Museen, eingespeichert, so daß der Kunde unnötige Wege vermeiden kann.

## Patentansprüche

1. Verfahren zum Suchen einer Zieladresse und zur Ausgabe der Zielrichtungsdaten der Zieladresse unter Einbeziehung der aus Zielsuch- und Navigationssystemen bekannten Prinzipien der Standortbestimmung und der Ermittlung der Route zwischen Standort und Zieladresse anhand von Wegnetzdaten und verkehrsbezogenen Daten, **dadurch gekennzeichnet**, daß die zur Erkennung einer Zieladresse durch ein Zielsuch-bzw. Navigationssystem fehlenden Angaben zur Zieladresse über eine Suchroutine in Verbindung mit mindestens einem namen- und adressbezogenen Auskunftsystem ermittelt werden, wobei die Abfrage des Nutzers nach der gewünschten Zieladresse und den ihm zur Zieladresse bekannten Angaben über die Suchroutine in Form eines Dialogs zwischen Nutzer und Auskunftssystem geführt wird, und daß die Zielrichtungsdaten anhand der konkretisierten Zieladresse ermittelt und an den Nutzer ausgegeben werden.

2. Verfahren nach Anspruch 1, dadurch gekennzeichnet, daß die Abfrage des Nutzers nach den ihm bekannten Zielinformationen unter Einbeziehung eines Operators in den Dialog zwischen Nutzer und Auskunftssystem erfolgt.

3. Verfahren nach Anspruch 1 und 2, dadurch gekennzeichnet, daß die konkrete Zieladresse vorzugsweise über das als namen- und adressbezogenes Auskunftssystem ausgebildete Telefonverzeichnis der Telekom AG ermittelt wird.

4. Verfahren nach Anspruch 1, dadurch gekennzeichnet, daß der Dialog zwischen Kunden und Auskunftssystem, die Übermittlung von Zielrichtungsdaten und die Führung des Kunden zur Zieladresse über das Handy eines Mobilfunksystems durchgeführt werden.
